# EUROPEAN PATENT APPLICATION

(11) **EP 0 568 514 A2**
(43) Date of publication of application: **03.11.1993**
(21) Application number: 93850091.5
(22) Date of filing: 26.04.1993
(51) Int. Cl.: F16D 3/72

(54) **Universal joint**

(30) Priority: 28.04.1992 SE 9201321
(71) Applicant: ITAB INDUSTRI AB, S-553 02 Jönköping (SE)
(72) Inventor: Rosengren, Lars, S-561 28 Huskvarna (SE)
(74) Representative: Arwidi, Bengt Dr.

(57) **Abstract**

The present invention is for a universal joint for transmitting rotational movement between two rotating members of a machine or device. The universal joint according to the invention is extremely simple to manufacture, allowing it to be made in one manufacturing step as an integrated component part of a device or machine. The joint comprises a number of thin flexible sections 1 and a number of connecting non-flexible disclike intermediate sections 2. Each flexible section is offset by 90 degrees to the adjacent one in order to allow combined bending actions. The intermediate non-flexible disc sections are designed to have a specific opening angle, to limit the bending displacement of each flexible section.

## Description

The object of the present invention is to provide a means for transmitting rotational movement between two rotating members of a machine or device, where the axles are not parallel or in line. A number of devices for the same purpose are known in the present art, all being either complex in design and manufacture and/or having limited performance, i.e. only allowing a limited angular or transversal offset of the axles and/or having limited capacity to transmit force. Some other problems common to most of the known art is the requirement for regular maintenance and adjustments due to wear, and often irregular transmission characteristics, varying around the angle of rotation, especially at large angles of displacement. Further problems are that commonly found universal joints have a tendency to lock up if the angle of displacement is too large. Some of the advantages of the present invention are outlined below.

The universal joint according to the invention is extremely simple to manufacture, especially in large quantities, allowing it to be made in one manufacturing step as an integrated component part of a device or machine. It is especially suited for manufacturing by different tool-bound processes such as injection moulding. (Other processes such as mechanical processing are also possible)

The universal joint according to the invention also allows almost any desired angular displacement of the rotational movements having at the same time a very smooth transmission of force.

Furthermore the universal joint according to the invention is maintenance free, in that there are no parts of the joint that have a frictional contact with each other. The function of the invention relies on elastic flexing of the material from which the joint is produced.

The invention will below be described more in detail by means of the various embodiments illustrated in the accompanying drawings.

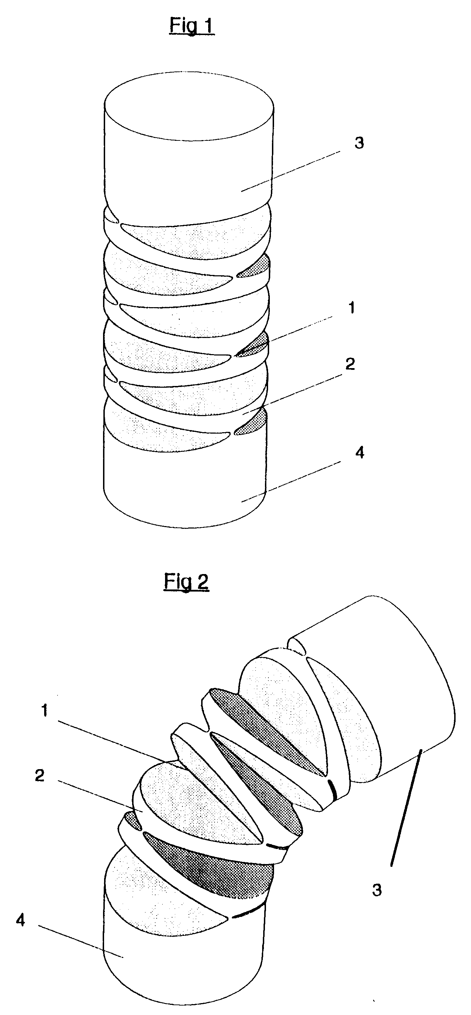

Figs. 1 and 2 show an example of a universal joint according to the invention in perspective view.

Fig. 1 shows the joint in a straight position (not bent).

Fig. 2 shows the joint of Fig. 1 in a typical operating position, (bent).

Fig. 3 shows an alternative embodiment of the invention.

The joint comprises a number of thin flexible sections, 1, perpendicular to the axis of rotation, and a number of connecting, non-flexible disclike intermediate sections 2. Each flexible section is offset by 90 degrees to the adjacent one in order to allow combined bending actions in all directions parallel to the diameters of the joint. The total bending of the joint as it rotates is distributed among the flexible joint sections each one being bent more or less according to its angular position. Each angle of rotation of the universal joint corresponds to a specific bending angle of each of the flexible sections, varying from a maximum design value in one direction to the same amount of bending in the opposite direction as the joint rotates through 360 degrees. The intermediate non-flexible disc sections are designed to have a specific opening angle, to limit the bending displacement of each flexible section to a level not exceeding the design parameters for acceptable performance with the specific material of construction being used. The ends of the joint, 3 and 4, are in this case protrusions from, or integrated parts of the device or machine in which the joint is applied and are therefore only shown symbolically in the drawings.

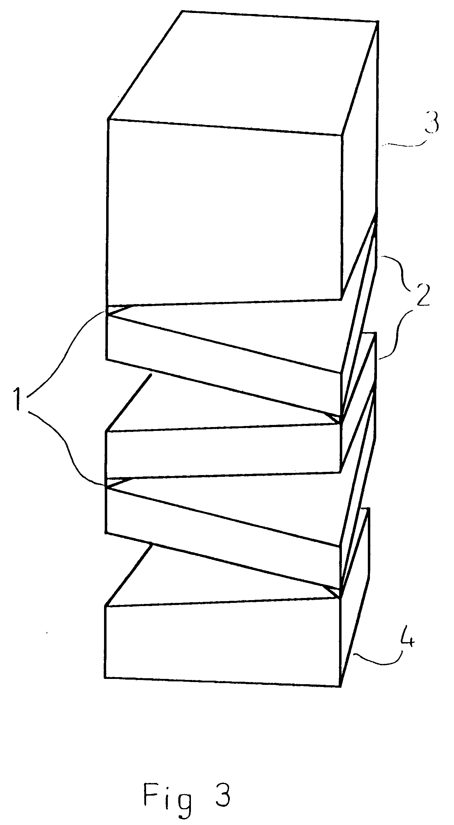

The embodiment of the invention as shown in Fig. 3 is intended to save material without too much increase of the costs for making the production tools. This design may also offer advantages as to the connection between the universal joint and the components to which it is to be connected.

The dimensions of the joint and the parts thereof will of course vary due to the intended applications of use. As an example it can be mentioned that if the outer diameter of the joint is about 30 mm the length of the flexible sections 1 is suitably between 1 and 2 mm, preferably 1½ mm, and the maximum thickness of the intermediate sections 2 is between 12 and 15 mm. When the joint is in a straight position, the angle v between two surfaces of adjacent intermediate sections 2 in most cases should be between 20 degrees and 30 degrees, preferably between 25 and 27 degrees. This will allow a maximum bending angle at each flexible section within the limits of suitable design materials, among which polyethylene and polypropylene is preferred.

The example described above is only a typical application of the invention. Other configurations are possible depending on the specific use of the flexible joint. In addition to purely geometrical variations, such as length and diameter, the number of sections used and their design angle will vary according to required parameters such as force transmission, flexibility, strength requirements etc. If a smooth transmission of rotational movement or a large angular displacement is required, a larger number of sections is called for, which on the other hand limits the stiffness and load carrying capabilities of the joint. If a large number of sections is used, each section will have a smaller opening angle. It is for example also possible to arrange the flexible sections with different bending angles in relation to one another. The invention is further not limited to a circular cross-section such as shown in Figs. 1 and 2, but other configurations are also suitable, for instance a square cross-section, as shown in Fig. 3, with the flexible parts parallel to the diagonals would save material and still maintain strength. It is further not required for the flexible sections to be distributed with continuously varying degrees of rotation, in certain cases it is possible or desireable instead to have all or a majority of the sections of one angel in one end of the joint and the others in the other end. This is for instance advantageous if control of the bending forces introduced by the action of the joint is required. It is also possible to incorporate devices, i.e. protrusions, within each section to limit bending and rotation in certain directions or to a limited amount, such as might be required in certain applications, for instance where the joint is used to transmit rotational movements of instrument setting knobs. The production of the joint could be done as an integrated procedure in the production of other parts or functions of the product or device of which the joint is a component. It is especially well suited to be produced by injection moulding or similar processes, allowing it to be produced extremely economical.

## Claims

**1)** Flexible, universal joint for the transmission of rotational movement comprising several identical or similar non-flexible sections, characterized in that the non-flexible sections (2) are connected to each other by a corresponding number of linear, flexible sections (1) which are rotationally displaced at an angle to each other.

**2)** Universal joint according to claim 1, characterized in that the flexible (1) and non-flexible (2) sections constitute one integral part of homogenous material.

**3)** Universal joint according to claim 2, characterized in that the non-flexible sections (2) have a generally platelike shape whereby the surfaces of each plate converge towards each other in the direction from the adjacent flexible sections.

**4)** Universal joint according to any of the preceeding claims, characterized in that in the lengthwise direction of the joint the thickness of the flexible sections (1) is much smaller than the thickness of the non-flexible sections (2).

**5)** All products, means, methods and devices as explicitely or implicitely are apparent from the specification, claims and drawings.
